# EUROPÄISCHE PATENTSCHRIFT

(11) **EP 1 195 880 B1**
(45) Veröffentlichungstag und Bekanntmachung des Hinweises auf die Patenterteilung: **17.09.2003**
(21) Anmeldenummer: 00810916.7
(22) Anmeldetag: 04.10.2000
(51) Int. Cl.: H02K 41/03, G05B 19/23, G05B 19/25

(54) **Verfahren zur Erhöhung der Positioniergenauigkeit eines relativ zu einem Stator bewegbar angeordneten Elements**
Method of enhancing the positioning accuracy of an element movably arranged relative to a stator
Procédé pour augmenter la précision de positionnement d'un élément mobile par rapport à un stator

(43) Veröffentlichungstag der Anmeldung: 10.04.2002
(73) Patentinhaber: NTI AG, 8005 Zürich (CH)
(72) Erfinder: Schmid, Kuno, 8400 Winterthur (CH); Ausderau, Daniel, 8047 Zürich (CH); Hitz, Marco, Dr.-Ing., 1712 Tafers (CH); Rohner, Ronald, Dr.-Ing., 8964 Rudolfstetten (CH)
(74) Vertreter: Heinen, Detlef

(56) Entgegenhaltungen:
- EP-A- 0 590 384
- DE-A- 3 829 405
- US-A- 5 489 845
- US-A- 5 530 303

## Beschreibung

Die Erfindung betrifft ein Verfahren zur Erhöhung der Positioniergenauigkeit eines relativ zu einem Stator bewegbar angeordneten Elements gemäss dem Oberbegriff des unabhängigen Patentanspruchs.

Ein Linearmotor mit Sensoren ist z.B. aus US-A- 5530303 bekannt.

In vielen Anwendungsgebieten kommt es darauf an, ein bewegliches Element, welches relativ zu einem feststehenden Teil - einem Stator - bewegbar ist, genau positionieren zu können. Bei Motoren, insbesondere bei Linearmotoren, kommt es bei vielen Einsatzgebieten auf eine hohe Genauigkeit an, mit welcher der Läufer in eine bestimmte Position gebracht werden kann. Dieser Forderung nach hoher Positioniergenauigkeit stehen die Fertigungstoleranzen der einzelnen Komponenten gegenüber, bei dem genannten Beispiel des Linearmotors sind dies die statorseitigen Fertigungstoleranzen und die Fertigungstoleranzen des Läufers bzw. von dessen Komponenten.

Während die statorseitigen Fertigungstoleranzen noch relativ gut ausgemessen und beispielsweise im Prozessor bzw. der Elektronik des Linearmotors entsprechend berücksichtigt werden können, ist dies beispielsweise bei inhomogen magnetisierten Magneten des Läufers - wenn überhaupt - nur mit sehr hohem Aufwand möglich. Häufig sind aber die Abweichungen des Läufers von der Sollposition, die von der inhomogenen Magnetisierung der einzelnen Magnete des Läufers herrühren, wesentlich dominanter als solche, die von Fertigungstoleranzen des Stators herrühren, und die statorseitigen Toleranzen können ja ohnehin ausgemessen und kompensiert werden.

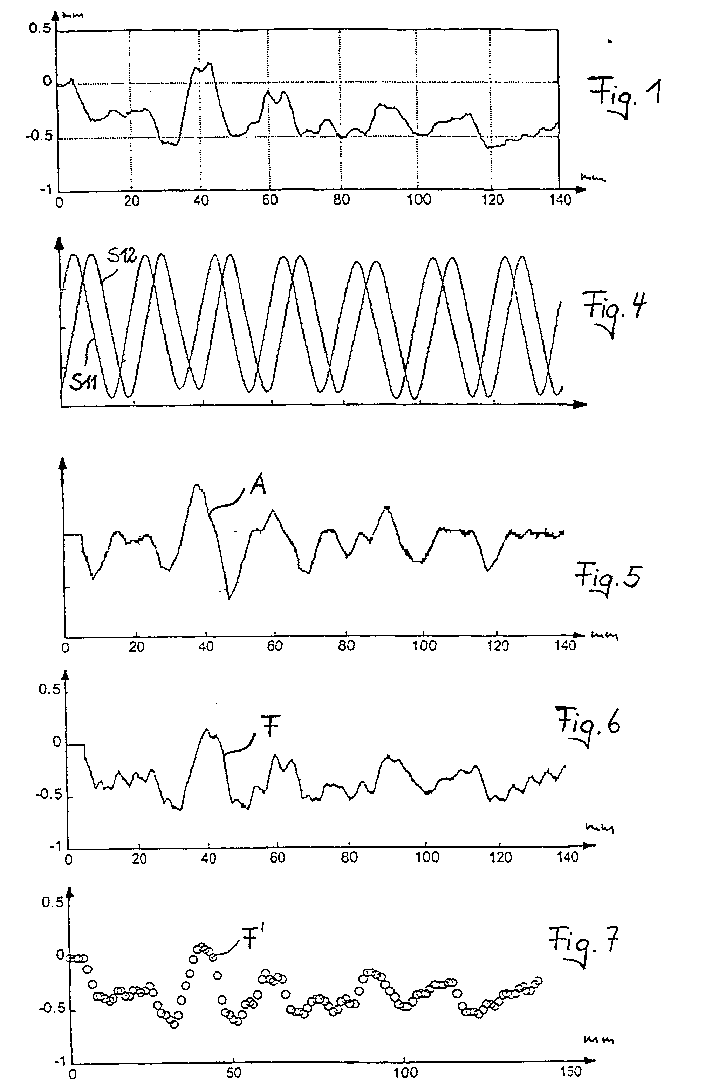

In Fig. 1 ist ein Beispiel für der Verlauf einer Abweichung der tatsächlichen Position des Läufers eines Linearmotors von seiner Sollposition grafisch dargestellt, wobei auf der Ordinate die Abweichung der tatsächlichen Position des Läufers von seiner Sollposition aufgetragen ist, und auf der Abszisse die Sollposition des Läufers. Man erkennt in diesem Beispiel, dass die Abweichungen der tatsächlichen Position der Läufers im Bereich einer Sollposition von 30 mm (das soll heissen, der Läufer ist um etwa 30 mm ausgefahren), wie auch im Bereich einer Sollposition von etwa 120 mm, teilweise vom Betrag her mehr als 0.5 mm beträgt. Generell erkennt man an diesem Beispiel, dass die Abweichung der tatsächlichen Position des Läufers von seiner Sollposition doch recht erheblich sein kann, speziell wenn man berücksichtigt, dass bei bestimmten Einsatzgebieten von Linearmotoren zum Teil eine Positionsgenauigkeit gefordert wird, die nur eine Abweichung von typischerweise 0.1 mm zulässt.

Selbst wenn man also die für jeden Linearmotor und für jede Position des Läufers spezifische Abweichung von der Sollposition möglicherweise in sehr aufwändiger Art und Weise ausmessen könnte, um sie später im Betrieb kompensieren zu können, wäre diese Vorgehensweise für die Praxis jedoch völlig ungeeignet.

Hier will die Erfindung Abhilfe schaffen und ein Verfahren vorschlagen, mit welchem - im Falle des Linearmotors - eine Ermittlung des Positionsfehlers des Läufers auf einfache Weise möglich ist. Allgemein gesprochen soll eine einfache Ermittlung des Positionsfehlers des bewegbaren Elements erfolgen können.

Diese Aufgabe wird verfahrensmässig gelöst durch die Merkmale des unabhängigen Verfahrensanspruchs. Besonders vorteilhafte Varianten ergeben sich aus den Merkmalen der abhängigen Verfahrensansprüche. Vorrichtungsmässig wird die Aufgabe gelöst durch die Merkmale des unabhängigen Vorrichtungsanspruchs, besonders vorteilhafte Weiterbildungen ergeben sich aus den Merkmalen der abhängigen Vorrichtungsansprüche.

Im Folgenden wird die Erfindung anhand der Zeichnung näher erläutert. Es zeigen in schematischer Darstellung:
- Fig. 1: ein Beispiel für die Abweichung (Fehler) der tatsächlichen Position des Läufers eines Linearmotors von seiner Sollposition,
- Fig. 2: ein Ausführungsbeispiel eines Linearmotors,
- Fig. 3: einen Ausschnitt aus dem Stator eines Linearmotors mit zwei Sensoren zur Erfassung der Position des Läufers,
- Fig. 4: den Verlauf der Sensorsignale,
- Fig. 5: den Verlauf des räumlichen Abstandes, der zwei gleich grossen und aufeinander folgenden Sensorsignalen entspricht, welche durch denselben Geber hervorgerufen werden,
- Fig. 6: den Verlauf des aufgrund des erfindungsgemässen Verfahrens ermittelten Fehlers der Sollposition (Abweichung der Sollposition von der tatsächlichen Position)
und
- Fig. 7: den Verlauf des Fehlers der Sollposition aus Fig. 6, wobei jedoch nur eine bestimmte Anzahl von diskreten Werten gespeichert wird.

Im nachfolgend beschriebenen Fall werden die Verhältnisse in einem Linearmotor betrachtet, als Anwendungsbeipiel für das erfindungsgemässe Verfahren, ohne dabei aber das Anwendungsgebiet auf Linearmotoren begrenzen zu wollen. Ebenso kann das Verfahren z.B. bei rotativen Motoren eingesetzt werden bzw. allgemein bei Vorrichtungen oder Systemen, bei welchem ein bewegbares Element mit Gebern relativ zu einem Stator (feststehender Geräteteil) bewegt wird, wobei im Stator Sensoren angeordnet sind zur Erfassung der Position des bewegbaren Elements.

Wie bereits eingangs erläutert, ist in Fig. 1 der tatsächliche Verlauf des Positionsfehlers, also die Abweichung der tatsächlichen Position des Läufers eines Linearmotors von seiner Sollposition, welche beispielsweise von einer Anzeige des Linearmotors ausgegeben wird, dargestellt. Der in Fig. 1 dargestellte Positionsfehler ist nicht mit Hilfe des erfindungsgemässen Verfahrens bestimmt worden (sondern wurde z.B. ausgemessen).

Im Grunde genommen geht es bei der vorliegenden Erfindung darum, diesen tatsächlichen Fehler, der bei jedem Linearmotor vorhanden ist, aber für jeden Linearmotor spezifisch verläuft, bei einem Kalibrierungslauf vor der Inbetriebnahme auf einfache Weise - und eben nicht durch höchst aufwändiges Ausmessen - so genau wie möglich zu bestimmen und dann bei der Positionierung des Läufers im Betrieb zu berücksichtigen, damit dieser motorspezifische Fehler so gut wie möglich kompensiert werden kann und damit die für einige Anwendungen gewünschte hohe Genauigkeit des Linearmotors bei der Positionierung des Läufers gewährleistet werden kann.

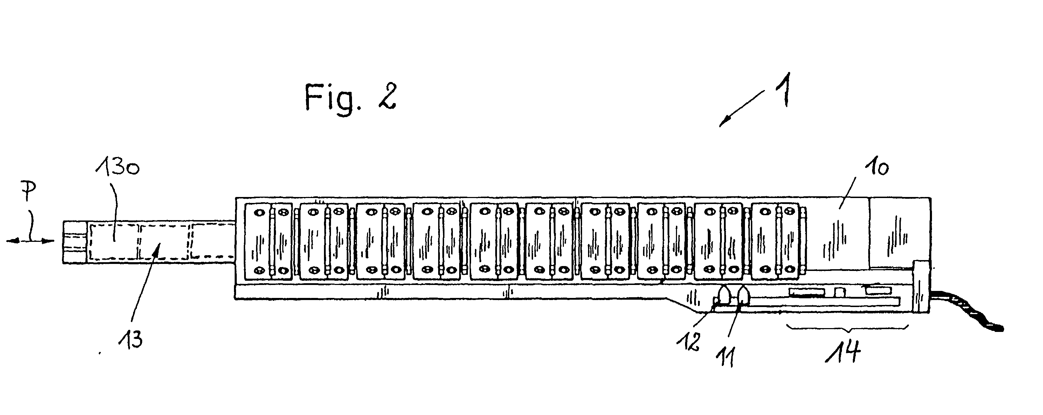

In Fig. 2 erkennt man einen Linearmotor 1 in einer stark vereinfachten Darstellung, wobei man ausser dem Stator 10 noch die Sensoren 11 und 12 zur Bestimmung der Position des Läufers 13 erkennen kann, sowie eine Elektronik 14. Die Permanentmagnete 130 des Läufers 13 sind hier nur gestrichelt angedeutet dargestellt, sie stellen jedoch die Geber dar, welche bei einer Bewegung des Läufers 13 in den Sensoren 11 und 12 entsprechende Sensorsignale hervorrufen. Die Sensoren 11 und 12 können beispielsweise als Hall-Sensoren ausgebildet sein.

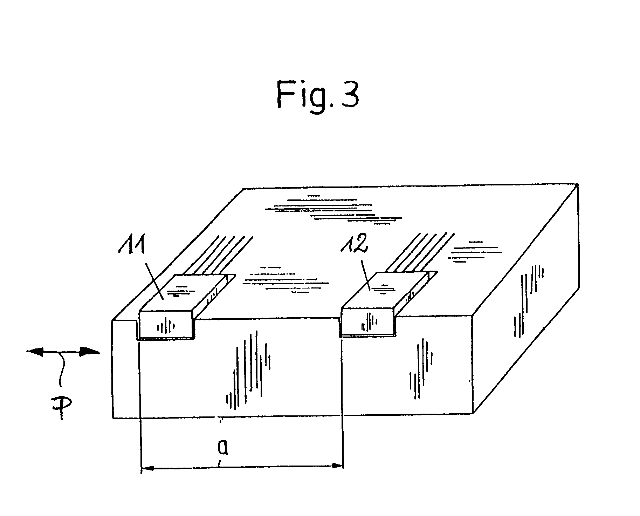

In Fig. 3 ist in einem Ausschnitt aus einem Stator dargestellt, wie die Sensoren 11 und 12 beispielsweise angeordnet sind, nämlich in einem Abstand a voneinander. Wird nun der Läufer mit seinen Permanentmagneten (in Fig. 3 nicht dargestellt) an den Sensoren 11 und 12 in Richtung der Pfeile P vorbei bewegt, wie dies beim Aus- und Einfahren des Läufers der Fall ist, so werden in den Sensoren 11 und 12 entsprechende Sensorsignale hervorgerufen.

In Fig. 4 ist beispielsweise ein solcher Verlauf der Sensorsignale S11 und S12 der Sensoren 11 und 12 dargestellt. Die Sensorsignale sind frei von einem Offset (der eventuell zuvor kompensiert wurde) und haben die gleiche Amplitude. Darüberhinaus erkennt man, dass die Sensorsignale S11 und S12 einen periodischen, etwa sinus- bzw. cosinus-förmigen, Verlauf aufweisen, was aber keine zwingende Voraussetzung für das erfindungsgemässe Verfahren darstellt.

Da die Sensoren 11 und 12 im Stator in dem festen Abstand a voneinander angeordnet sind (Fig. 3), verlaufen auch die beiden kurven, die den Verlauf der Sensorsignale S11 und S12 darstellen, in einem festen Abstand relativ zueinander, der diesem Abstand a der beiden Sensoren 11 und 12 voneinander entspricht. Bezogen auf die Sollposition, das ist diejenige Position, von der die Elektronik des Linearmotors "glaubt", dass dies die tatsächliche Position des Läufers ist, ist der Abstand zwischen den beiden Sensorsignalen jedoch nicht konstant, was aus Fig. 4 nicht unmittelbar zu erkennen ist. Vielmehr kann dieser Fehler - abhängig davon, wie weit der Läufer ausgefahren ist - variieren. Dies ist dann in Fig. 5 zu erkennen.

In Fig. 5 ist der räumliche Abstand A dargestellt, der zwei gleich grossen aufeinander folgenden Sensorsignalen des ersten und des zweiten Sensors 11 bzw. 12 entspricht. Man erkennt, dass dieser Abstand A variiert, also abhängig von der Sollposition des Läufers ist. Der Verlauf der in Fig. 5 dargestellten Kurve erklärt sich folgendermassen: Beginnt man bei der Sollposition null (Nullstellung des Läufers), so erregt ein ganz bestimmter Geber in dieser Sollposition das Sensorsignal S11 (Fig. 5) im ersten Sensor 11 (Fig. 3). Wird dann der Läufer aus der Nullstellung heraus ausgefahren, so muss er zunächst um einen bestimmten Weg ausgefahren werden, bis genau derselbe Geber in dem zweiten Sensor 12 (Fig. 3) ein Sensorsignal S12 gleicher Grösse hervorruft wie er es in der Nullstellung des Läufers in dem ersten Sensor 11 hervorgerufen hat. Solange der Läufer nicht mindestens um diesen Weg aus der Nullstellung herausgefahren ist, kann auch nicht der Abstand A zwischen zwei Sensorsignalen gleicher Grösse bestimmt werden, weil das Sensorsignal S12 des zweiten Sensors eben noch gar nicht den Wert erreicht hat, welchen der Geber in dem ersten Sensor 11 in der Nullstellung des Läufers hervorgerufen hat. Für diesen Bereich - also für den Bereich, bis der Läufer so weit aus der Nullstellung herausgefahren ist, bis der zweite Sensor 12 ein gleich grosses Sensorsignal aufweist wie der erste Sensor 11 in der Nullstellung- wird davon ausgegangen, dass der Abstand A so gross ist wie der tatsächliche Abstand a der beiden Sensoren 11 und 12 im Stator, welcher ja von der Konstruktion her bekannt ist oder ausgemessen werden kann (mit anderen Worten gesagt, man nimmt für diesen Bereich einen Fehler von null an oder der Fehler in diesem Bereich wird mit anderen Verfahren bereinigt).

Fig. 6 zeigt nun den Verlauf des Positionsfehlers F, wie er mit Hilfe des erfindungsgemässen Verfahrens ermittelt und nach Beendigung des Kalibrierlaufs bei der tatsächlichen Positionierung des Läufers berücksichtigt wird. Man erkennt in Fig. 6, dass der Fehler F am Anfang so lange null ist (er wird einfach als null angenommen, wie zuvor erläutert), bis der Läufer so weit aus der Nullstellung ausgefahren ist, dass das Sensorsignal S12 des zweiten Sensors 12 (Fig. 3) gleich gross ist wie das Sensorsignal S11 des ersten Sensors 11 (Fig. 3) in der Nullstellung des Läufers.

Daran anschliessend ergibt sich der Fehler F - beginnend von der Nullstellung des Läufers beim Ausfahren - wie folgt: Sobald das Sensorsignal S12 des zweiten Sensors 12 gleich gross ist wie das Sensorsignal S11 in der Nullstellung des Läufers, wird der Abstand A bestimmt. Dieser Abstand A ist nichts Anderes als die Differenz zwischen der ersten Sollposition (hier: Nullstellung) und der zweiten Sollposition (das ist diejenige Position, von der die Elektronik "glaubt", dass sich der Läufer an dieser Position tatsächlich befindet). Um nun den Positionsfehler des Läufers in dieser zweiten Position (das ist diejenige Position, in welcher das Sensorsignal S12 des Sensors 12 gleich gross ist wie das Sensorsignal S11 in der Nullstellung des Läufers) bestimmen zu können, muss ausser dem Abstand A der Fehler in der ersten Position - hier der Nullstellung - bekannt sein. Dieser Fehler ist aber gemäss der Annahme zunächst einmal null. Unter dieser Annahme ergibt sich der Positionsfehler des Läufers in der zweiten Position aus der Differenz zwischen dem Abstand A (das ist die Differenz zwischen den beiden Positionen, die die Elektronik als Läuferpositionen ausgibt) und dem tatsächlichen Abstand a (Fig. 3) der Sensoren 11 und 12 voneinander.

Allgemein wird der Fehler in der zweiten Position des Läufers jedoch so bestimmt, dass zunächst der Fehler in der zugehörigen ersten Position des Läufers (das ist diejenige Position, in der das unmittelbar vorausgehende und vom demselben Geber hervorgerufene Sensorsignal S11 des ersten Sensors 11 gleich gross war wie das Sensorsignal S12 des zweiten Sensors 12 in der zweiten Position) ermittelt wird. Ist dieser Fehler in der ersten Position bekannt, so wird zu diesem Fehler die Differenz aus dem Abstand A und dem tatsächlichen Abstand a der Sensoren 11 und 12 addiert. Auf diese Weise erhält man dann den Fehler in der zweiten Position des Läufers. Wenn man dies sukzessive für alle "zweiten" Positionen des Läufers durchführt, erhält man den Verlauf des Fehlers F, wie er in Fig. 6 dargestellt ist. Dieser so ermittelte Fehler F wird dann nach Beendigung des Kalibrierlaufs bei der Positionierung des Läufers berücksichtigt, was beispielsweise durch die Basis-Software oder durch die jeweilige Applikations-software erfolgen kann.

Bei genügend Speicherplatz kann man nun in möglichst kleinen Inkrementen den Verlauf des Fehlers F speichern und nach Beendigung des Kalibrierlaufs bei der Positionierung des Läufers berücksichtigen. Jedoch ist es durchaus für die Praxis gut möglich, nur eine bestimmte Anzahl solcher Werte für den Fehler zu speichern. Den Fehler in einer Sollposition zwischen zwei Positionen, für die der Fehler gespeichert ist, erhält man dann beispielsweise durch Interpolation. Wie das aussehen kann, wenn nur eine bestimmte Anzahl solcher Werte für den Fehler gespeichert werden, ist in Fig. 7 dargestellt, in welcher man praktisch den Verlauf des Fehlers F von Fig. 6 in "abgetasteter" Form F' erkennt.

Bei einer weiteren Ausführungsvariante kann der Fehler in der ersten Position des Läufers (das ist die Position, bei welcher das Sensorsignal S11 des ersten Sensors 11 gleich gross ist wie das Sensorsignal S12 des zweiten Sensors S12 an der Stelle, an der der Fehler bestimmt werden soll) gewichtet werden, beispielsweise mit einem Faktor 0.75. Dadurch können Tendenzen zur Schwingung des Fehlers F, angeregt durch Ausreisser (kleine Störungen) in der Sensorsignalerfassung, verringert bzw. unterdrückt werden. Das Verfahren zur Fehlerbestimmung wird dadurch stabiler.

Bei wieder einer anderen Variante wird dann, wenn die Steigung des Sensorsignals einen vorgebbaren Wert unterschreitet (mit anderen Worten gesagt dann, wenn der Signalverlauf zu flach ist), bei der Bestimmung des Abstandes A eine Interpolation zwischen dem vorhergehenden Wert und dem nachfolgenden Wert für den Abstand A vorgenommen. Dadurch wird vermieden, dass in Bereichen, in denen ein sehr flacher Verlauf des Sensorsignals vorliegt, eine ungenaue Zuordnung zwischen dem Sensorsignal und der zugehörigen Sollposition erfolgt und dadurch möglicherweise eine grössere "Verfälschung" entsteht als bei der Interpolation.

Wie bereits weiter vorne erwähnt, ist die Anwendung des Verfahrens nicht nur auf Linearmotoren beschränkt, sonder eignet sich generell für Vorrichtungen, bei denen ein bewegbares Element relativ zu einem Stator (feststehendes Element) bewegbar ist und dessen Position genau bestimmbar sein muss. Die Geber müssen auch keinesfalls zwingend magnetisch sein und die Sensoren müssen dementsprechend auch nicht zwingend Magnetfeldsensoren sein, sondern können beispielsweise auch auf optischem oder mechanischem Prinzip basieren. Nur im Anwendungsfall des Linearmotors ist dies typischerweise der Fall. Das Verfahren eignet sich beispielsweise auch für rotative Systeme (z.B. für Systeme, bei denen es auf eine sehr genaue Positionierung des Rotors ankommt). Was die Sensoren betrifft, mit denen während des Kalibrierungslaufs der Positionsfehler ermittelt wird, so können dies die gleichen Sensoren sein, welche später - nach erfolgter Kalibrierung - im Betrieb des Linearmotors als Positionssensoren zur Bestimmung der Position des Läufers eingesetzt werden, es können aber auch gesonderte Kalibrierungssensoren eingesetzt werden. Die Kalibrierung kann auch während dem Betrieb durchgeführt bzw. zwischendurch nachgeführt werden.

## Patentansprüche

1. Verfahren zur Erhöhung der Positioniergenauigkeit eines relativ zu einem Stator (10) bewegbar angeordneten Elements (13) , wobei im Stator (10) mindestens zwei Sensoren (11,12) vorgesehen sind, ein erster (11) und ein zweiter (12) Sensor, die in Bezug auf die Bewegungsrichtung (P) des bewegbar angeordneten Elements (13) im Stator (10) in einem Abstand (a) voneinander angeordnet sind, und wobei das relativ zum Stator (10) bewegbar angeordnete Element (13) mit Gebern (130) versehen ist, die zusammen mit dem bewegbaren Element (13) mitbewegbar sind und bei einer ausfahrenden Bewegung des Elements (13) relativ zum Stator (10) zuerst in dem ersten Sensor (11) und dann bei fortschreitender Bewegung des Elements in dem zweiten Sensor (12) jeweils ein Sensorsignal (S11,S12) hervorrufen,
**dadurch gekennzeichnet,**
**dass** zunächst in einem Kalibrierlauf das bewegbare Element (13) über den gesamten möglichen Bereich der Bewegung bewegt wird und während dieser Bewegung die Sensorsignale (S11/S12) des ersten (11) und des zweiten (12) Sensors sowie die zugehörigen Sollpositionen des bewegbaren Elements (13) erfasst werden, dass dann der räumliche Abstand (A) ermittelt wird, der zwei gleich grossen aufeinander folgenden und durch denselben Geber hervorgerufenen Sensorsignalen (S11,S12) des ersten (11) und des zweiten (12) Sensors entspricht, und dass aus dem so ermittelten räumlichen Abstand (A) , dem tatsächlichen Sensorabstand (a) und den zugehörigen Sollpositionen dann der Fehler (F) der Sollposition des bewegbaren Elements ermittelt und bei der Positionierung des bewegbaren Elements (13) berücksichtigt wird.

2. Verfahren nach Anspruch 1, bei welchem die Ermittlung des Fehlers (F) an einer bestimmten Sollposition des bewegbaren Elements (13) derart erfolgt, dass das Sensorsignal (S12) des zweiten Sensors (12) an der bestimmten Sollposition ausgelesen wird, danach diejenige Sollposition ausgelesen wird, bei der der erste Sensor (11) ein gleich grosses unmittelbar vorausgehendes Sensorsignal (S11) aufweist, danach der Positionsfehler (F) des Läufers an dieser Sollposition ausgelesen wird, und dann zu diesem Positionsfehler (F) die Differenz zwischen dem zuvor ermittelten räumlichen Abstand (A), bei dem die beiden Sensoren (11,12) ein gleich grosses Sensorsignal (S11,S12) aufweisen, und dem tatsächlichen Abstand (a) der Sensoren (11,12), addiert wird.

3. Verfahren nach Anspruch 2, bei welchem der Positionsfehler an derjenigen Sollposition, bei welcher der erste Sensor (11) ein gleich grosses Sensorsignal (S11) aufweist wie bei der bestimmten Sollposition, gewichtet wird.

4. Verfahren nach einem der vorangehenden Ansprüche, bei welchem, dann, wenn der Betrag der Steigung der Sensorsignale (S11,S12) einen vorgebbaren Wert unterschreitet, anstelle einer Ermittlung des räumlichen Abstands (A) eine Interpolation zwischen dem vorhergehenden und dem nachfolgenden Wert für den Abstand (A) vorgenommen wird.

5. Verfahren nach einem der vorangehenden Ansprüche, bei welchem der tatsächliche Fehler (F) der Sollposition des bewegbaren Elements (13) nicht für jede einzelne Sollposition in einem Speicher abgelegt wird, sondern nur für eine bestimmte Anzahl von Sollpositionen, und dass dann, wenn der Fehler für eine Sollposition benötigt wird, die zwischen zwei im Speicher abgelegten Sollpositionen liegt, eine Interpolation vorgenommen wird.

6. Vorrichtung mit einem Stator (10) und einem relativ zu diesem Stator (10) bewegbaren Element (13), wobei im Stator (10) mindestens zwei Sensoren (11,12) vorgesehen sind, ein erster (11) und ein zweiter (12) Sensor, die in Bezug auf die Bewegungsrichtung (P) des bewegbar angeordneten Elements im Stator in einem Abstand (a) voneinander angeordnet sind, und wobei das relativ zum Stator bewegbare Element (13) mit Gebern (130) versehen ist, die zusammen mit dem bewegbaren Element (13) mitbewegbar sind und bei einer ausfahrenden Bewegung des Elements (13) relativ zum Stator (10) zuerst in dem ersten Sensor (11) und dann bei fortschreitender Bewegung in dem zweiten Sensor (12) jeweils ein Sensorsignal (S11,S12) hervorrufen, **dadurch gekennzeichnet, dass** Mittel (14) vorgesehen sind zur Erfassung der Sensorsignale (S11,S12) des ersten (11) und des zweiten (12) Sensors sowie der zugehörigen Sollpositionen des bewegbaren Elements (13) und zur Ermittlung des räumlichen Abstands (A), welcher zwei gleich grossen aufeinander folgenden Sensorsignalen (S11,S12) des ersten (11) und des zweiten (12) Sensors entspricht, und dass Mittel (14) vorgesehen sind, welche aus dem so ermittelten räumlichen Abstand (A), dem tatsächlichen Sensorabstand (a) und den zugehörigen Sollpositionen dann den Fehler (F) der Sollposition des bewegbaren Elements (13) ermitteln und bei der Positionierung des bewegbaren Elements (13) berücksichtigen.

7. Vorrichtung nach Anspruch 6, welche einen Linearmotor (1) mit einem Stator (10) und einem Läufer (13) umfasst, und bei welcher die Geber als Permanentmagnete (130) im Läufer angeordnet sind und die im Stator (10) angeordneten Sensoren (11,12) als Magnetfeldsensoren ausgebildet sind, insbesondere als Hall-Sensoren, und bei welcher die Mittel zur Erfassung der Sensorsignale und der zugehörigen Sollpositionen in einer Elektronik (14) vorgesehen sind, ebenso wie die Mittel, welche den räumlichen Abstand (A) ermitteln und welche dann den Fehler (F) der Sollposition ermitteln und bei der Positionierung des Läufers (13) berücksichtigen.

8. Vorrichtung nach Anspruch 7, bei welcher die Mittel (14) zur Erfassung der Sensorsignale (S11,S12) und der zugehörigen Sollpositionen ebenso wie die Mittel (14), welche den räumlichen Abstand (A) ermitteln und welche dann den Fehler (F) der Sollposition ermitteln und bei der Positionierung des Läufers (13) berücksichtigen, in der Basis-Software und/oder in der Applikations-Software der Elektronik (14) vorgesehen sind.

9. Vorrichtung nach einem der Ansprüche 6 bis 8, bei welcher die Sensoren (11,12) zur Ermittlung des Positionsfehlers (F) die gleichen Sensoren sind wie die Positionssensoren, welche im Betrieb die Position des beweglichen Elements bzw. des Läufers (13) bestimmen.

## Claims

1. A method for increasing the positioning accuracy of an element (13) which is movably arranged relative to a stator (10), with at least two sensors (11, 12) being provided in the stator (10), a first sensor (11) and a second sensor (12), which are arranged at a distance (a) from one another in the stator (10), with respect to the movement direction (P) of the movably arranged element (13), and with the relative to the stator (10) movably arranged element (13) being provided with encoders (130) which can move together with the movable element (13) and, when the element (13) carries out a movement relative to the stator (10), firstly produce a sensor signal (S11) in the first sensor (11) and then, as the movement of the element progresses, produce a sensor signal (S12) in the second sensor (12),
**characterized in that**
first of all, in a calibration run, the movable element (13) is moved over the entire possible range of movement and, during this movement, the sensor signals (S11, S12) of the first sensor (11) and of the second sensor (12) as well as the associated nominal positions of the movable element (13) are detected, wherein the spatial distance (A) is then determined which corresponds to two sensor signals (S11 S12), which are of equal magnitude, follow one another and are caused by the same encoder, of the first sensor (11) and of the second sensor (12), and wherein the error (F) of the nominal position of the movable element is then determined from the spatial distance (A) determined in this way, from the actual distance (a) between the sensors and from the associated nominal positions, and is taken into account in the positioning of the movable element (13).

2. The method according to claim 1, in which the determination of the error (F) is carried out at a specific nominal position of the movable element (13), in such a manner that the sensor signal (S12) of the second sensor (12) is read at that specific nominal position, that the nominal position at which the first sensor (11) has an immediately preceding sensor signal (S11 of equal magnitude is then read, the position error (F) of the armature at this nominal position is then read, and the difference between the previously determined spatial distance (A) at which the two sensors (11, 12) have a sensor signal (S11, S12) of equal magnitude and the actual distance (a) between the sensors (11, 12) is then added to this position error (F) .

3. The method according to claim 2, in which the position error is weighted at that nominal position at which the first sensor (11) has a sensor signal (S11 of equal magnitude to that at the specific nominal position.

4. The method according to any one of the preceding claims, in which, if the magnitude of the gradient of the sensor signals (S11 S12) is less than a value which can be predetermined, an interpolation between the preceding value and the next value for the distance (A) is carried out rather than determining the spatial distance (A).

5. The method according to any one of the preceding claims, in which the actual error (F) of the nominal position of the movable element (13) is not stored in a memory for each individual nominal position, but only for a specific number of nominal positions, and wherein an interpolation is carried out when the error is required for a nominal position which is located between two nominal positions which are stored in the memory.

6. An apparatus having a stator (10) and an element (13) movable relative to this stator (10), with at least two sensors (11, 12) being provided in the stator (10), a first sensor (11) and a second sensor (12), which are arranged at a distance (a) from one another in the stator, with respect to the movement direction (P) of the movable element, and with the element (13) movable relative to the stator being provided with encoders (130) which can move together with the movable element (13) and, when the element (13) carries out a movement relative to the stator (10), firstly produce a sensor signal (S11) in the first sensor (11) and then, as the movement of the element progresses, produce a sensor signal (S12) in the second sensor (12), **characterised in that** means (14) are provided for detection of the sensor signals (S11, S12) of the first sensor (11) and of the second sensor (12) as well as of the associated nominal positions of the movable element (13), and for determination of the spatial distance (A) which corresponds to two sensor signals (S11, S12), which are of equal magnitude and follow one another, of the first sensor (11) and of the second sensor (12), and wherein means (14) are provided which then determine the error (F) of the nominal position of the movable element (13) from the spatial distance (A) determined in this way, from the actual distance (a) between the sensors and from the associated nominal positions, and take this into account in the positioning of the movable element (13).

7. The apparatus according to claim 6, which comprises a linear motor (1) with a stator (10) and an armature (13), and in which the encoders are arranged as permanent magnets (130) in the armature, and the sensors (11, 12) which are arranged in the stator (10) are in the form of magnetic field sensors, in particular Hall sensors, and in which the means for detection of the sensor signals and of the associated nominal positions are provided in an electronics device (14), in the same way as the means which determine the spatial distance (A) and which then determine the error (F) of the nominal position and take this into account in the positioning of the armature (13).

8. The apparatus according to claim 7, in which the means (14) for detection of the sensor signals (S11 S12) and the associated nominal positions are provided in the basic software and/or in the application software in the electronics device (14) in the same way as the means (14) which determine the spatial distance (A) and which then determine the error (F) of the nominal position and take this into account in the positioning of the armature (13).

9. The apparatus according to any one of claims 6 to 8, in which the sensors (11, 12) for determination of the position error (F) are the same sensors as the position sensors which determine the position of the moving element or of the armature (13) during operation.

## Revendications

1. Procédé pour augmenter la précision de positionnement d'un élément (13) disposé de manière mobile par rapport à un stator (10), au moins deux capteurs (11, 12) étant prévus dans le stator (10), un premier (11) et un deuxième capteur (12), lesquels sont disposés dans le stator (10) à une certaine distance (a) l'un de l'autre par rapport au sens de déplacement (P) de l'élément (13) disposé de manière mobile, et l'élément (13) disposé de manière mobile par rapport au stator (10) étant muni de codeurs (130) qui peuvent bouger en même temps que l'élément mobile (13) et qui provoquent à chaque fois un signal de capteur (S11, S12), tout d'abord dans le premier capteur (11) lors d'un mouvement sortant de l'élément (13) par rapport au stator (10) et ensuite dans le deuxième capteur (12) lors de la poursuite du mouvement de l'élément, **caractérisé en ce que** l'élément mobile (13) est initialement déplacé sur toute la zone de mouvement possible au cours d'une course de calibrage et, pendant ce déplacement, les signaux de capteur (S11, S12) du premier (11) et du deuxième capteur (12) ainsi que les positions de consigne associés de l'élément mobile (13) sont détectées, que la distance dans l'espace (A) est déterminée, laquelle correspond aux signaux de capteur (511, S12) du premier (11) et du deuxième capteur (12) successifs de même amplitude et provoqués par le même codeur, et que l'erreur (F) de la position de consigne de l'élément mobile est déterminée à partir de la distance dans l'espace (A), de la distance réel entre les capteurs (a) et des positions de consigne associées ainsi déterminés et prise en compte lors du positionnement de l'élément mobile (13).

2. Procédé selon la revendication 1, avec lequel la détermination de l'erreur (F) s'effectue à une position de consigne donnée de l'élément mobile (13) de manière à ce que le signal de capteur (S12) du deuxième capteur (12) soit relevé à la position de consigne déterminée, après quoi est relevée la position de consigne à laquelle le premier capteur (11) présente un signal de capteur (S11) de même amplitude immédiatement précédent, après quoi l'erreur de position (F) de l'induit est relevée au niveau de cette position de consigne, et ensuite la différence entre la distance dans l'espace (A) déterminée précédemment, à laquelle les deux capteurs (11, 12) présentent un signal de capteur (S11, S12) de même amplitude et la distance (a) réel entre les capteurs (11, 12) est additionné.

3. Procédé selon la revendication 2, avec lequel l'erreur de position est pondérée à la position de consigne à laquelle le premier capteur (11) présente un signal de capteur (S11) de même amplitude qu'à la position de consigne déterminée.

4. Procédé selon l'une des revendications précédentes, avec lequel, lorsque la valeur de la pente des signaux de capteur (S11, S12) est inférieure à une valeur qui peut être prédéterminée, est effectuée une interpolation entre la valeur précédente et la valeur suivante de la distance (A) au lieu d'une détermination de la distance dans l'espace (A).

5. Procédé selon l'une des revendications précédentes, avec lequel l'erreur (F) réelle de la position de consigne de l'élément mobile (13) riest pas enregistrée dans une mémoire pour chaque position de consigne individuelle, mais seulement pour un nombre donné de positions de consigne, et qu'ensuite une interpolation est effectuée lorsqu'il est nécessaire de connaître l'erreur pour une position de consigne qui se trouve entre deux positions de consigne enregistrées en mémoire.

6. Dispositif comprenant un stator (10) et un élément mobile (13) par rapport à ce stator (10), au moins deux capteurs (11, 12) étant prévus dans le stator (10), un premier (11) et un deuxième capteur (12), lesquels sont disposés dans le stator à une certaine distance (a) l'un de l'autre par rapport au sens de déplacement (P) de l'éléme disposé de manière mobile, et l'éléme (13) disposé de manière mobile par rapport au stator étant muni de codeurs (130) qui peuvent bouger en même temps que l'éléme mobile (13) et qui provoquent à chaque fois un signal de capteur (511, S12), tout d'abord dans le premier capteur (11) lors d'un mouvement sortant de l'éléme (13) par rapport au stator (10) et ensuite dans le deuxième capteur (12) lors de la poursuite du mouvement de l'élément, **caractérisé en ce que** des moyens (14) sont prévus pour détecter les signaux de capteur (S11, S12) du premier (11) et du deuxième capteur (12) ainsi que les positions de consigne associées de l'élément mobile (13) et pour déterminer la distance dans l'espace (A) qui correspond aux signaux de capteur (S11, S12) du premier (11) et du deuxième capteur (12) successifs de même amplitude, et que des moyens (14) sont prévus pour déterminer l'erreur (F) de la position de consigne de l'élément mobile (13) à partir de la distance dans l'espace (A), de la distance réel entre les capteurs (a) et des positions de consigne associées de l'élément mobile (13) ainsi déterminés et la prendre en compte lors du positionnement de l'élément mobile (13).

7. Dispositif selon la revendication 6, lequel comprend un moteur linéaire (1) muni d'un stator (10) et d'un induit (13), et avec lequel les codeurs sont réalisés sous la forme d'aimants permanents (130) disposés dans l'induit et les capteurs (11, 12) disposés dans le stator sont réalisés sous la forme de capteurs de champ magnétique, notamment de capteurs à effet Hall, et avec lequel les moyens de détection des signaux du capteur et des positions de consigne associées sont prévus dans un circuit électronique (14), tout comme les moyens qui déterminent la distance dans l'espace (A) et qui déterminent ensuite l'erreur (F) de la position de consigne et la prennent en compte lors du positionnement de l'induit (13).

8. Dispositif selon la revendication 7, avec lequel les moyens (14) de détection des signaux de capteur (S11, S12) et des positions de consigne associées ainsi que les moyens (14) qui déterminent la distance dans l'espace (A) et qui déterminent ensuite l'erreur (F) de la position de consigne et la prennent en compte lors du positionnement de l'induit (13) sont prévus dans le logiciel de base et/ou le logiciel d'application du circuit électronique (14).

9. Dispositif selon l'une des revendications 6 à 8, avec lequel les capteurs (11, 12) destinés à déterminer l'erreur de position (F) sont les mêmes capteurs que les capteurs de position qui déterminent la position de l'élément mobile ou de l'induit (13) pendant le fonctionnement.
